# EUROPÄISCHE PATENTANMELDUNG

(11) **EP 2 284 977 A2**
(43) Veröffentlichungstag der Anmeldung: **16.02.2011**
(21) Anmeldenummer: 10006983.0
(22) Anmeldetag: 07.07.2010
(51) Int. Cl.: H02K 1/14, H02K 7/106, H02P 6/10

(54) **Maschine zum Festlegen**

(30) Priorität: 03.08.2009 DE 102009035894
(71) Anmelder: Wittenstein AG, 97999 Igersheim (DE)
(72) Erfinder: Gröning, Ingolf, 97816 Lohr am Main (DE); Kruse, Ralf, 97072 Würzburg (DE)
(74) Vertreter: Stern, Urs

(57) **Zusammenfassung**

Maschine zum berührungslosen Festlegen eines Bewegungsfreiheitsgrades, mit einem Primärteil und einem Sekundärteil, wobei das Primärteil und das Sekundärteil ausgebildet sind, so dass eine Rastkraft im stromlosen Zustand der Maschine mindestens 50% der Maximaikraft der Maschine beträgt.

## Beschreibung

### Bescheibung

Die Erfindung betrifft eine Maschine nach dem Oberbegriff des Anspruchs 1, und einen Antrieb mit einer solchen Maschine und ein Verfahren nach den nebengeordneten Ansprüchen.

### Stand der Technik

Zum Bremsen oder Halten von Wellen von elektrischen Maschinen werden primär Bremsen eingesetzt, die auf dem Prinzip des Reibschlusses basieren. Problematisch an solchen Bremsen ist, dass sie einem Verschleiß unterliegen.

Aus der DE 102 20 687 A1 ist es bekannt, das Selbsthaltemoment einer elektrischen Maschine auszunutzen, um in Zusammenwirkung mit einem verbundenen Getriebe im stromlosen Zustand der elektrischen Maschine ein Stillstehen der elektrischen Maschine zu erreichen. Bei dieser Maschine wird ausgenutzt, dass die elektrische Maschine mit einem Getriebe verbunden ist, sodass zusätzlich Reibverluste im Getriebe verwendet werden, um das Stillstehen sicherzustellen. Dieser Aufbau ist kompliziert und nicht in allen Anwendungen einsetzbar.

### Offenbarung der Erfindung

Aufgabe der Erfindung ist es, die oben genannten Nachteile des Standes der Technik zu beseitigen und insbesondere ist es Aufgabe der Erfindung, eine Festhaltebremse anzugeben, die einen verringerten oder gar keinen Verschleiß aufweist.

Zur Lösung der Aufgabe wird eine Maschine nach Anspruch 1 bereitgestellt. Diese Maschine bietet den Vorteil, dass sie verschleißfrei und berührungslos eine hohe Rastkraft erzeugt. "Rastkraft" und "Maschine" sind dabei allgemein zu verstehen, sodass von Maschine insbesondere elektrische Maschinen eingeschlossen sind, die rotatorisch oder translatorisch arbeiten. Rastkraft umfasst daher auch den Begriff des Selbsthaltemoments. Mit der Maschine ist es möglich, auch bei schwierigen Umgebungsbedingungen, z.B. in Öl, eine Bremswirkung zu erzielen; allgemein ist ein Einsatz in weiten Umgebungsbedingungen möglich. Allgemein umfasst die Bremse einen ortsfesten Teil, bevorzugt der Primärteil, und einen bewegten Teil, bevorzugt der Sekundärteil, wobei der Primärteil ein Stator und der Sekundärteil einen Rotor oder, im Fall einer Linearmaschine, ein Translator ist. Die Anordnung und die Ausbildung der Teile sind so gestaltet, dass sich eine möglichst hohe Rastkraft aufgrund des Reluktanzeffektes ergibt. Die Rastkraft beträgt bevorzugt mindestens 50% der Maximalkraft der elektrischen Maschine, wobei die Maximalkraft als die maximal durch die Maschine bereitgestellte Kraft, falls die Maschine als Antrieb verwendet würde, definiert wird. Noch bevorzugter beträgt die Rastkraft mindestens 70 oder 80% und noch bevorzugter mindestens 90% der Maximalkraft. Im Falle einer Rotationsmaschine ist die Maximalkraft das maximale Drehmoment im Rotationsbetrieb. Dabei wird unter Umständen in Kauf genommen, dass die Drehmomentwelligkeit hoch sein kann, um die Vorteile der Erfindung zu nutzen.

Vorzugsweise weist der Sekundärteil zumindest einen Permanentmagneten auf. Besondere Vorzüge bietet eine Mehrzahl von Permanentmagneten, die wechselweise angeordnet sind. Auf diese Weise können im Zusammenspiel mit Zähnen eines Stators bei sich periodisch wiederholenden Lagen Rastplätze mit hohen Rastkräften gebildet werden. Besonders bevorzugt sind Ausführungsformen, bei denen zusätzlich am Primärteil zumindest ein Permanentmagnet vorgesehen ist, um die Rastkraft weiter zu erhöhen. Eine zusätzliche Bremse gegenüber einem unbeabsichtigten Bewegen der Maschine bietet eine im stromlosen Zustand aktivierbare Kurzschlussschaltung. Eine solche Kurzschlussschaltung wird vorgesehen, um einen Elektromagneten der Maschine, der vorzugsweise auf dem Primärteil angeordnet ist, kurzzuschließen. Zwar wirkt das Kurzschluss-Bremsdrehmoment oder die Kurzschluss-Bremskraft lediglich bei einer Bewegung entlang des Freiheitsgrades der Maschine, allerdings können auf diese Weise Kraft- oder Drehmomentstöße abgefangen werden, sodass eine vorübergehende Drehbewegung oder translatorische Bewegung weitgehend verhindert wird. Unter Bewegungsfreiheitsgrad ist hier bei einer rotatorischen Maschine die Drehung der Welle der Maschine und bei einer Linearmaschine die lineare Bewegung des Translators gegenüber dem Stator gemeint.

Vorteilhafterweise sind eine Nutteilung des Primärteils und eine Polteilung des Sekundärteils identisch. Dies bietet den Vorteil, dass die einzelnen Beiträge der einzelnen Zähne sich addieren. Die Nutteilung des Primärteils entspricht dabei vorzugsweise dem Abstand oder dem Winkel zwischen zwei Spulenkernen. Die Polteilung entspricht dementsprechend vorzugsweise einem Winkelabstand oder translatorischem Abstand zwischen zwei Polen, oder den Mittelebenen, von Permanentmagneten. Allgemein kann mit Nutteilung allerdings auch ein Abstand zwischen Permanentmagneten und umgekehrt mit Polteilung ein Abstand zwischen Elektromagneten bezeichnet werden. Dabei bedeutet Abstand vorzugsweise der Abstand zwischen den jeweiligen Mitten der Teile.

Vorteilhafterweise beträgt die Breite eines Zahns an dessen Kopf, d.h. die Zahnbreite, von zumindest einem Zahn des Primärteils mindestens 20%, bevorzugter mindestens 30% der Nutteilung des Primärteils. Dabei entspricht bei einer rotatorischen Maschine vorzugsweise eine Winkelbreite des Zahns am Luftspalt zwischen Primärteil und Sekundärteil der Zahnbreite. Weiterhin wird bevorzugt, dass die Zahnbreite von zumindest einem Zahn des Primärteils höchstens 80% der Nutteilung des Primärteils entspricht, bevorzugter höchstens 65% und noch bevorzugter höchstens 55%. Weiterhin wird bevorzugt, dass eine Zahnbreite von zumindest einem Zahn des Primärteils mindestens 80%, bevorzugter 90% oder 95% einer Magnetbreite des Primärteils entspricht. Dabei ist die Magnetbreite die Breite der Spulenwicklung oder der Spulenwicklungen zwischen zwei Zähnen. Bevorzugt entspricht die Zahnbreite von zumindest einem Zahn des Primärteils höchstens 120%, bevorzugter 110% oder 105% einer Magnetbreite des Primärteils. Anzumerken ist, dass bei allen Relativangaben dieses Absatzes, die sich auf einen Zahn beziehen jeweils ausdrücklich offenbart wird, dass zumindest die Hälfte aller Zähne des Primärteils oder alle Zähne des Primärteils entsprechend ausgebildet sind. Allgemein bieten die genannten Maßnahmen den Vorteil, dass die Rastkraft erhöht wird.

Vorteilhafterweise umfasst die Maschine mindestens eine Kontrolleinheit, die eingerichtet ist, um einen Elektromagneten der Maschine zu bestromen, sodass die Rastkraft reduziert wird. Durch ein gezieltes Bestromen von mindestens einem Elektromagneten oder bevorzugt mindestens der Hälfte der Elektromagneten des Primärteils kann erreicht werden, dass die Rastkraft reduziert wird. Die Bestromung erfolgt vorzugsweise mit einem periodisch veränderlichen Strom. Der notwendige Strom zur Kompensation errechnet sich dabei aus dem Umlaufintegral um die Feldstärke geteilt durch die Anzahl der Windungen. Bevorzugt wird der Strom gegenphasig eingespeist. Auf diese Weise wird eine maximale Reduzierung der Rastkraft erreicht. Die Periodendauer wird vorzugsweise in Abhängigkeit der Drehzahl der Maschine ausgewählt. Zweckmässiger Weise wird der Amplitudenverlauf des Stroms in der Abhängigkeit eines Kraftverlaufs bei einer Bewegung im stromlosen Zustand bestimmt. Dabei wird die Welle oder der Translator oder der Rotor oder allgemein der Sekundärteil bewegt und der Kraftverlauf im stromlosen Zustand gemessen. Ebenso ist es möglich, den Kraftverlauf im stromlosen Zustand durch eine Berechnung zu bestimmen. Dieser Kraftverlauf wird ausgewertet, um den Strom entsprechend gegenphasig auf die Spule oder die Spulenden zu beaufschlagen. Vorteilhafterweise erfolgt die Bestromung derart, dass die Rastkraft zumindest weitgehend kompensiert wird. Dabei bedeutet weitgehend eine Kompensierung von mindestens 50%, bevorzugter 70% oder 80%. Dies bietet den Vorteil, dass trotz der großen Rastkraft eine ausreichende Laufruhe der Maschine möglich ist. Vorzugsweise umfasst die Maschine eine Kontrolleinheit, die eingerichtet ist, um eine der oben genannten bevorzugten Bestromungen des Elektromagneten zu ermöglichen.

Anzumerken ist, dass ein Verfahren nach dem nebengeordneten Verfahrensanspruch und eine Verwendung nach dem nebengeordneten Verwendungsanspruch unabhängig Gegenstände der Erfindung sind.

Im Rahmen eines erfindungsgemäßen Verfahrens wird bevorzugt auf eine Festhalteanforderung hin mindestens ein Elektromagnet oder alle Elektromagneten der Maschine stromlos geschaltet, um eine Rastkraft aufzubauen. Weiterhin wird bevorzugt, dass zumindest eine Spule eines Elektromagneten kurzgeschlossen wird, um die oben genannten Vorteile zu erreichen. Auf eine Freigabeanforderung hin kann eine Bestromung des Elektromagneten erfolgen. Anzumerken ist, dass mit dem Ausdruck Elektromagneten vorzugsweise Spulen des Primärteils gemeint sind, wobei die Wicklungsanordnung auf dem Primärteil, welche die Spulen bildet, bevorzugt zumindest einphasig ausgeführt ist. Ebenso bevorzugt wird eine dreiphasige Wicklungsanordnung. Vorzugsweise wird ein Umrichter zur Speisung der Wicklung oder des Elektromagneten oder der Elektromagneten eingesetzt, wobei ein eingespeister Strom vorzugsweise in erster Näherung sinusförmig ist. Auf diese Weise wird zwar nicht mit Sicherheit gewährleistet, dass die Rastkraft vollständig kompensiert wird, allerdings ist auf diese Weise eine Reduktion möglich, sodass ein im Allgemeinen ausreichend störungsfreier Lauf gewährleistet ist.

Ein weiterer Gegenstand der Erfindung ist ein Antrieb mit einer elektrischen Antriebsmaschine und einer Maschine in einer der oben beschriebenen bevorzugten Ausführungsformen oder mit den oben beschriebenen bevorzugten Merkmalen. Dabei ermöglicht die Maschine ein selektives berührungsloses Festlegen der Antriebsmaschine. Hiermit ist gemeint, dass der angetriebene Freiheitsgrad, also beispielsweise die Rotation oder die Translation, mit der Rastkraft festgelegt werden können. Bevorzugte Ausführungsformen sind beispielsweise eine Rotationsantriebsmaschine, wobei auf einer Welle ein Rotor montiert sein kann, welcher mit zwei Statoren zusammenwirkt, wobei ein erster der Statoren zum Antrieb und ein zweiter der Statoren als Bremse im Sinne einer hier beschriebenen Maschine dient. Ebenso können die Antriebswicklung oder die Antriebswicklungen und die Bremswicklung oder die Bremswicklungen auf einem Stator angeordnet sein, um Platz zu sparen. Weiterhin ist es auch möglich, die Antriebsmaschine und die Maschine vollkommen getrennt auszuführen und beispielsweise über ein Getriebe zu verbinden oder auch lediglich über eine Welle zu verbinden. Allgemein ist die Verwendung einer Maschine, wie sie hierin offenbart wird, zum selektiven Festlegen einer Antriebsmaschine, insbesondere einer elektrischen Antriebsmaschine, ein unabhängiger Aspekt dieser Erfindung.

Kurze Beschreibung der Zeichnungen
Fig. 1 zeigt schematisch einen Ausschnitt aus einer erfindungsgemäßen Maschine;
Fig. 2 zeigt verschiedene Drehmomentverläufe, welche mit der erfindungsgemäßen Maschine der Fig. 1 erreicht werden können; und
Fig. 3 zeigt schematisch die Verwendung einer erfindungsgemässen elektrischen Maschine entsprechend Fig. 1.

### Beschreibung eines bevorzugten Ausführungsbeispiels

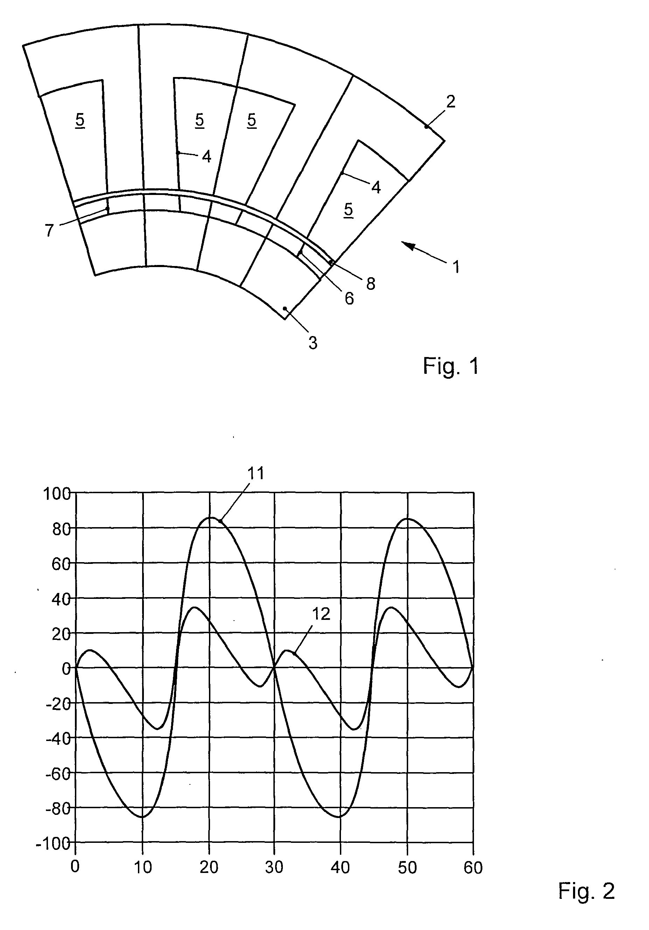

Die Fig. 1 zeigt einen 60°-Ausschnitt eines vollständigen Maschinenumfangs einer erfindungsgemäßen Maschine. Die übrigen 300° entsprechen den dargestellten 60° in einer wiederholten Anordnung. Die elektrische Maschine 1 ist eine Rotationsmaschine, welche ein außenliegendes Primärteil 2 und ein innenliegendes Sekundärteil 3 umfasst. Der Primärteil 2 bildet einen ortsfesten Stator und der Sekundärteil 3 bildet einen Rotor. Der Bewegungsfreiheitsgrad der elektrischen Maschine 1 ist die Rotation des Sekundärteils 3 innerhalb des Primärteils 2. Das Primärteil 2 umfasst ein Blechpaket, welches Zähne 4 ausbildet, wobei um die Zähne 4 jeweils Spulen 5 gewickelt sind, sodass die Zähne 4 zusammen mit den Spulen 5 Elektromagnete bilden. Der Rotor weist auf seiner radial außenliegenden Seite Permanentmagnete 6 und 7 auf, wobei der Permanentmagnet 6 einen Rotorsüdpol und der Permanentmagnet 7 einen Rotornordpol bildet. Zwischen dem Primärteil 2 und dem Sekundärteil 3 ist ein Luftspalt 8 vorhanden. Über den Luftspalt 8 und die Zähne 4 bildet sich zwischen den Permanentmagneten 6 und 7 ein Magnetfeld aus, welches im stromlosen Zustand der Spulen 5 eine Rastkraft bildet, hier konkret ein Rastmoment, welches einer Drehbewegung des Sekundärteils 3 gegenüber dem Primärteil 2 entgegenwirkt. Durch eine Bestromung der Spule 5 kann erreicht werden, dass das Magnetfeld, welches die Rastkraft aufbaut, reduziert wird, sodass die durch die Maschine 1 gebildete Bremse gelöst wird. Bei einer Drehung des Sekundärteils 3 wird die Bestromung der Spulen 5 derart vorgenommen, dass der Strom in den Spulen 5 über die Zeit bzw. über den Drehwinkel des Sekundärteils 3 in erster Näherung sinusförmig synchron mit der Rotation des Sekundärteils 3 variiert wird, um die Rastkraft zu reduzieren.

In der Fig. 2, die im Zusammenhang mit der Fig. 1 erläutert wird, ist das Ergebnis eines stromlosen Zustandes und eines Zustandes bei Bestromung gezeigt. Die Kurve 11 entspricht dem Rastmoment im stromlosen Zustand. Dabei ist über die Hochachse ein Rastmoment in Prozent des maximalen Drehmoments der Maschine angegeben. An den Spitzen des Rastmoments beträgt das Rastmoment mehr als 80% des maximalen Drehmoments der Maschine. Das Rastmoment 11 ist dabei über den Drehwinkel in Grad des Sekundärteils 3 oder des Rotors der elektrischen Maschine 1 aufgetragen. Das Rest-Rastmoment 12 ist ebenfalls in der Fig. 2 aufgetragen und entspricht einem Bremsmoment bei eingeschaltetem Strom in den Spulen 5. Das Rest-Rastmoment 12 beträgt bei jedem Drehwinkel weniger als 40% des maximalen Drehmoments, sodass das Rastmoment durch die Bestromung um mehr als 50% reduziert wurde. Zur Erreichung des relativ hohen Rastmomentes wurde eine Zahnbreite am Luftspalt gewählt, die im Wesentlichen der Magnetbreite bzw. der Breite der Spule 5 entspricht. "Im wesentlichen" bedeutet hierbei ein Verhältnis im Bereich üblicher Fertigungstoleranzen. Weiterhin beträgt die Zahnbreite im wesentlichen 50% der Polteilung, welche gleich der Nutteilung ist. Dabei sollte angemerkt werden, dass die Nutteilung und die Polteilung Winkel sind, wobei die verglichenen Längen die jeweiligen Abwicklungen der überstrichenen Winkel am Luftspalt 8 sind. Eine weitere Maßnahme, welche allgemein zur Erhöhung des Rastmoments beiträgt, ist eine Erhöhung der axialen Länge der Zähne.

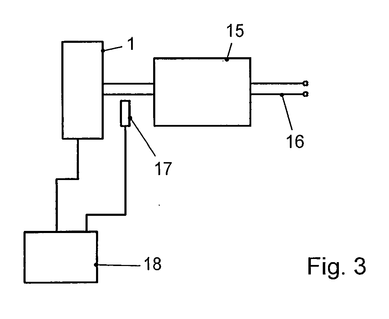

Die Fig. 3 zeigt die Verwendung der elektrischen Maschine 1 als Bremse für eine Antriebsmaschine 15. Die Antriebsmaschine 15 weist eine Abtriebswelle 16 auf, mit welcher der Sekundärteil 3 (siehe Fig. 1) der elektrischen Maschine verbunden ist. Während eines Antriebsbetriebs der Antriebsmaschine 15 überwacht ein Sensor 17 die Winkellage der Abtriebswelle 16. Das Signal des Sensors 17 wird einer Kontrolleinrichtung 18 zur Verfügung gestellt, welche die Spulen der elektrischen Maschine 1 derart mit Strom beaufschlagt, dass das Rastmoment der elektrischen Maschine 1 reduziert wird. Auf eine Festhalteanforderung bzw. Bremsanforderung hin unterbricht die Kontrolleinrichtung 18 die Bestromung der Spulen der elektrischen Maschine 1, sodass das Rastmoment erhöht wird. Schließlich ist die Kontrolleinrichtung 18 noch dazu eingerichtet, einzelne oder mehrere der Spulen 5 der elektrischen Maschine 1 kurzzuschließen, um einen Widerstand gegen eine Rotation der Welle 16 bei einer Festhalteanforderung zu erhöhen.

## Patentansprüche

1. Maschine (1), insbesondere elektrische Maschine, zum berührungslosen Festlegen eines Bewegungsfreiheitsgrades, mit
- einem Primärteil (2), und
- einem Sekundärteil (3),
**dadurch gekennzeichnet, dass**
das Primärteil (3) und das Sekundärteil (2) ausgebildet sind, so dass eine Rastkraft im stromlosen Zustand der Maschine (1) mindestens 50% der Maximalkraft der Maschine (1) beträgt.

2. Maschine nach Anspruch 1, **dadurch gekennzeichnet, dass** das Sekundärteil und/oder das Primärteil zumindest einen Permanentmagneten aufweist.

3. Maschine (1) nach einem der vorhergehenden Ansprüche, **dadurch gekennzeichnet, dass** eine im stromlosen Zustand aktivierbare Kurzschlussschaltung vorgesehen ist, um einen Elektromagneten der Maschine (1) kurz zu schließen.

4. Maschine (1) nach einem der vorhergehenden Ansprüche, **dadurch gekennzeichnet, dass** eine Nutteilung des Primärteils und eine Polteilung des Sekundärteils identisch sind.

5. Maschine (1) nach einem der vorhergehenden Ansprüche, **dadurch gekennzeichnet, dass** eine Zahnbreite von zumindest einem Zahn des Primärteils mindestens 20% und/oder höchstens 80% der Nutteilung des Primärteils entspricht.

6. Maschine (1) nach einem der vorhergehenden Ansprüche, **dadurch gekennzeichnet, dass** eine Zahnbreite von zumindest einem Zahn des Primärteils mindestens 80% und/oder höchstens 120% einer Magnetbreite des Primärteils entspricht.

7. Maschine (1) nach einem der vorhergehenden Ansprüche, **gekennzeichnet durch** eine Kontrolleinheit, die eingerichtet ist, um einen Elektromagneten der Maschine (1) zu bestromen, so dass die Rastkraft reduziert wird.

8. Maschine (1) nach Anspruch 7, **dadurch gekennzeichnet, dass** die Kontrolleinheit eingerichtet ist, den Elektromagneten im wesentlichen Sinusförmig zu bestromen.

9. Antrieb mit einer elektrischen Antriebsmaschine und einer Maschine (1) nach einem der Ansprüche 1 bis 8 zum selektiven berührungslosen Festelegen der Antriebsmaschine.

10. Verfahren zum berührungslosen selektiven Festlegen eines Bewegungsfreiheitsgrades einer Maschine (1) nach einem der Ansprüche 1 bis 8 mit den Schritten:
- Auf eine Festhalteanforderung hin stromlos Schalten eines Elektromagneten der Maschine (1) zum Aufbau einer Rastkraft zum Festlegen der Maschine (1),
- Auf eine Freigabeanforderung hin Bestromen des Elektromagneten, um eine Rastkraft zu minimieren zum Freigeben der Maschine (1) .

11. Verfahren nach Anspruch 10, **dadurch gekennzeichnet, dass** die Betromung mit einem periodisch veränderlichen Strom erfolgt.

12. Verfahren nach Anspruch 11, **dadurch gekennzeichnet, dass** die Periodendauer in Abhängigkeit der Drehzahl der Maschine (1) gewählt wird.

13. Verfahren nach Anspruch 11 oder 12, **dadurch gekennzeichnet, dass** der Amplitudenverlauf des Stroms in Abhängigkeit eines Kraftverlaufs bei Bewegung im stromlosen Zustand bestimmt wird.

14. Verfahren nach einem der Ansprüche 10 bis 13, **dadurch gekennzeichnet, dass** die Bestromung derart erfolgt, dass die Rastkraft zumindest weitgehend kompensiert wird.

15. Verwendung einer Maschine (1) nach einem der Ansprüche 1 bis 8 zum selektiven Festlegen einer Antriebsmaschine.
